# EUROPEAN PATENT APPLICATION

(11) **EP 3 726 347 A1**
(43) Date of publication of application: **21.10.2020**
(21) Application number: 18888626.1
(22) Date of filing: 12.02.2018
(51) Int. Cl.: G06F 3/041, G05B 19/05

(54) **VISUAL HUMAN-COMPUTER INTERACTION VEHICLE BATTERY SWAPPING CONTROL SYSTEM, AND VEHICLE-MOUNTED BATTERY OPERATING SYSTEM**

(30) Priority: 13.12.2017 CN 201711327459
(71) Applicant: Nio Nextev Limited, Hong Kong (CN)
(72) Inventor: DING, Xikun, Hong Kong (CN); MA, Yongyue, Hong Kong (CN); TIAN, Xiaotao, Hong Kong (CN)
(74) Representative: Gille Hrabal
(86) International application number: PCT/CN2018/076491
(87) International publication number: WO 2019/114130

(57) **Abstract**

Disclosed are a vehicle battery swap manipulation system for visualized human-machine interactions and an onboard battery operating system. The vehicle battery swap manipulation system comprises: a first device (2) connected to a vehicle battery swap platform (1), configured for a user to select and trigger different buttons (32-35) to output different input requests to the first device (2); a second device (3) provided with one or more buttons (32-35) connected to the first device (2), configured for the user to select and trigger the buttons (32-35) to output an input request to the first device (2); and a display device (4) connected to the second device (3), configured to visually display a human-machine interaction interface containing data acquired according to the input request, wherein the human-machine interaction interface has at least a first display region (41) and a second display region (42), the user is able to choose to acquire corresponding information from the data by selecting a display item in the first display region (41) that is related to a vehicle battery swap, and the information is visually displayed in the second display region (42) to form a functional interface. The system has good human-machine interactivity.

## Description

### Technical Field

The invention relates to the field of automobile technologies, and in particular, to a vehicle battery swap manipulation system for visualized human-machine interactions, and an onboard battery operating system.

### Background Art

With the progress of science and technology and the development of society, various types of new energy vehicles such as electric vehicles and hybrid electric vehicles are increasingly widely used. With regard to these novel vehicles, technologies involving fast battery swapping and the like have increasingly become a focus and research topic in this field. Battery swap is a way to realize rapid power-on. Although the prior art provides a variety of monitoring methods for battery swap operation execution and a battery swap procedure of a battery swap system, the visualization and good interactivity of the battery swap system remains the biggest problem due to the involvement of user operations. In existing battery swap systems, their complexity brings corresponding operation complexity, which also brings great troubles to user operations. On one hand, various specialized terms or ambiguous expressions may seriously confuse users and make it difficult for the users to perform operations. On the other hand, due to the stacking of various functions in human-machine interfaces of the existing battery swap systems, various problems such as an inconvenient battery swap operation, an unclear system status, poor user experience, inconvenient equipment repair or maintenance are caused. Therefore, it is fairly necessary to carry out adequate studies on the existing problems or defects including those mentioned above, so as to make improvements.

### Summary of the Invention

In view of this, the invention provides a vehicle battery swap manipulation system for visualized human-machine interactions and an onboard battery operating platform, so as to effectively resolve the above problems and other problems in the prior art.

First, according to a first aspect of the invention, there is provided a vehicle battery swap manipulation system for visualized human-machine interactions, which comprises:
a first device connected to a vehicle battery swap platform, configured to acquire data related to a vehicle battery swap from the vehicle battery swap platform according to a received input request;
a second device provided with one or more buttons connected to the first device, configured for a user to select and trigger different buttons to output different input requests to the first device; and
a display device connected to the first device, configured to visually display a human-machine interaction interface containing the data acquired according to the input request, wherein the human-machine interaction interface has at least a first display region and a second display region, the user is able to choose to call corresponding information by selecting a display item in the first display region that is related to a vehicle battery swap, and the information is visually displayed in the second display region to form a functional interface.

In the vehicle battery swap manipulation system for visualized human-machine interactions according to the invention, optionally, at least a part of the information in the second display region allows to be visually modified by the user.

In the vehicle battery swap manipulation system for visualized human-machine interactions according to the invention, optionally, the display item in the first display region comprises one or more of monitoring an operation status of the vehicle battery swap platform, monitoring an abnormality of the vehicle battery swap platform and/or a vehicle battery swap operation, displaying a current battery swap operation of the vehicle battery swap platform, and displaying a system parameter of the vehicle battery swap platform.

In the vehicle battery swap manipulation system for visualized human-machine interactions according to the invention, optionally, the display item in the first display region further comprises an interface selection item configured to visually display, in the second display region, links used for the user to select operations to enter different functional interfaces.

In the vehicle battery swap manipulation system for visualized human-machine interactions according to the invention, optionally, the functional interface comprises:
a monitoring interface configured to visually display a completion status of each operating action and/or position information about a movement mechanism in the vehicle battery swap platform during a vehicle battery swap process;
an operation parameter interface configured to visually display an operation parameter of the vehicle battery swap platform;
a system parameter interface configured to visually display a preset safe operation parameter, a preset abnormality processing parameter, and/or an actual operation result determination parameter of the vehicle battery swap platform;
a parking platform interface configured to visually display a layout position of a vehicle on the vehicle battery swap platform and a layout position of a first sensor, wherein the first sensor is configured to detect the layout position of the vehicle on the vehicle battery swap platform; and/or
a dolly platform interface configured to visually display a layout position of a battery swap dolly on the vehicle battery swap platform and a layout position of a second sensor, wherein the second sensor is configured to detect the layout position of the vehicle on the vehicle battery swap platform.

In the vehicle battery swap manipulation system for visualized human-machine interactions according to the invention, optionally, the first display region is disposed below the second display region.

In the vehicle battery swap manipulation system for visualized human-machine interactions according to the invention, optionally, the buttons comprise a battery swap button configured to be selected and triggered by the user to automatically perform a vehicle battery swap operation via the vehicle battery swap platform.

In the vehicle battery swap manipulation system for visualized human-machine interactions according to the invention, optionally, the buttons further comprise:
a start button configured to be selected and triggered by the user to start operation of the vehicle battery swap platform;
a reset button configured to be selected and triggered by the user to perform initialization of the vehicle battery swap platform;
an emergency stop button configured to be selected and triggered by the user to stop the operation of the vehicle battery swap platform in an emergency; and/or
a pause button configured to be selected and triggered by the user to suspend the operation of the vehicle battery swap platform.

In the vehicle battery swap manipulation system for visualized human-machine interactions according to the invention, optionally, a PLC controller is used for the first device, and/or the second device is shaped as a panel, and/or the display device comprises one or more of a computer display terminal, a mobile device display terminal, and a video wall.

Second, according to a second aspect of the invention, there is provided an onboard battery operating system, which comprises:
a vehicle battery swap platform configured to perform a battery swap operation on an onboard battery; and
a vehicle battery swap manipulation system for visualized human-machine interactions according to any of the above descriptions.

Compared with the prior art, the technical solutions of the invention can not only provide a simple and quick human-machine interaction interface, which can bring easy, quick, and pleasing operation experience to user operations, but can also ensure a smooth flow of a vehicle battery swap operation procedure while allowing easy operations of a user, and a rich interface can make subsequent system maintenance, inspection, and other operations more convenient. The invention effectively resolves the problems of an inconvenient battery swap operation, an unclear system status, inconvenient equipment repair or maintenance in the prior art, and has good human-machine interactivity.

### Brief Description of the Drawings

The technical solution of the invention will be further described in detail below in conjunction with accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
FIG. 1 is a schematic diagram of a system composition of a vehicle battery swap manipulation system for visualized human-machine interactions according to an embodiment of the invention.
FIG. 2 is a schematic diagram of a human-machine interaction interface displayed by a display device in the embodiment shown in FIG. 1.
FIG. 3 is a schematic diagram of another human-machine interaction interface displayed by the display device in the embodiment shown in FIG. 1.

### Detailed Description of Embodiments

First, it should be noted that system compositions, structures, features, and advantages of a vehicle battery swap manipulation system for visualized human-machine interactions and an onboard battery operating platform of the invention will be specifically described below by way of example. However, all the descriptions are for the purpose of illustration only and should not be construed as limiting the invention in any way. As used herein, the technical term "onboard battery" includes, but is not limited to, a battery, a battery set, a battery pack, and the like that is used to power a vehicle, nor is the battery limited to be always placed on the vehicle for a service life of the battery. For example, in a battery swap mode, the battery can be removed from the vehicle because of a need for a quick battery swap operation.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Additionally, in order to simplify the figures, the same or similar parts and features may only be marked at one or several places in one and the same figure.

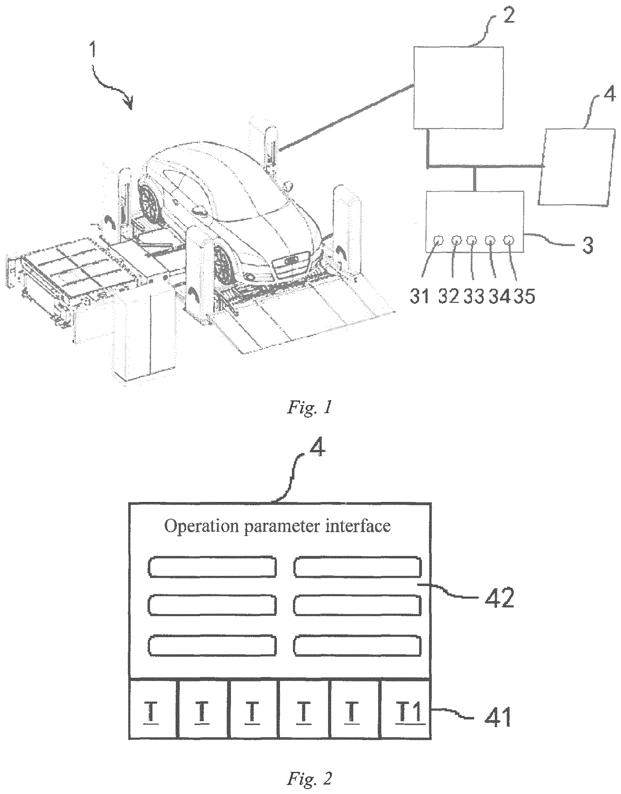

Referring to FIG. 1, FIG. 1 shows, by way of illustration only, a basic composition of a vehicle battery swap manipulation system for visualized human-machine interactions according to an embodiment of the invention. In this embodiment, the vehicle battery swap manipulation system for visualized human-machine interactions comprises a first device 2, a second device 3, and a display device 4, which will be described in detail below.

First, the first device 2 is configured to be connected to a vehicle battery swap platform 1, so as to acquire data related to a vehicle battery swap from the vehicle battery swap platform 1 according to an input request received by the first device 2. By way of illustration, such data includes, but is not limited to, a system setting parameter, an operation parameter, various procedure statuses of a battery swap operation, a vehicle positioning parameter, a battery locking and unlocking parameter, a parking platform layout position, a battery swap dolly layout position, a sensor layout position, system failure or abnormality information, and the like of the vehicle battery swap platform 1, which will be specifically described later. As an example, the first device 2 can be implemented by using a PLC controller. Certainly, the first device 2 described above is also allowed to be implemented by various means such as software, hardware, or a combination thereof without departing from the spirit of the invention.

The second device 3 has one or more buttons that are configured to be connected to the first device 2. Specifically, a user selects and triggers one of the above-mentioned buttons according to a use requirement, so that an input request can be output to the first device 2 after the button is triggered. Different buttons correspond to different input requests, so that the user can acquire different data from the vehicle battery swap platform 1 via the first device 2. For example, the second device 3 may be shaped as a panel so that the above-mentioned buttons can be conveniently arranged on the panel to facilitate selection operations of the user. However, it can be understood that, in the solution of the invention, it is entirely possible to shape the above-mentioned second device 3 into other suitable forms. For example, it is also conceivable to integrate the second device 3 and the first device 2 together.

In an optional scenario, the above-mentioned buttons of the second device 3 may comprise a battery swap button, and the user can select and trigger the battery swap button to automatically perform a vehicle battery swap operation via the vehicle battery swap platform 1. In addition, the above-mentioned buttons may also optionally comprise one or more of a start button 32, a reset button 33, an emergency stop button 34, and a pause button 35 according to actual application needs. Specifically, for the start button 32, the user can select and trigger the start button to start operation of the vehicle battery swap platform 1. For the reset button 33, the user can select and trigger the reset button to perform initialization of the vehicle battery swap platform 1. For the emergency stop button 34 and the pause button 35, the user can select and trigger them to respectively stop, in an emergency, and suspend the operation of the vehicle battery swap platform 1.

The display device 4 is a display component in the vehicle battery swap manipulation system for visualized human-machine interactions and is configured to visually display a human-machine interaction interface. Such a display device 4 may adopt one or more of a computer display terminal, a mobile device display terminal, and a video wall. The display device 4 is configured to be connected to the first device 2, and receives corresponding data acquired from the vehicle battery swap platform 1 via the first device 2 according to an input request corresponding to a button on the second device 3 that is selected and triggered by the user, and then displays information containing the data on the human-machine interaction interface of the display device 4. For example, such information may be new data formed by further data processing based on the foregoing data, which may be richer, more intuitive, or formally easier to understand by the user (for example, in a graphical form, a statistical form, or an acousto-optic form).

As shown in FIG. 2, in this embodiment, the human-machine interaction interface of the display device 4 is configured with two display regions, that is, a first display region 41 and a second display region 42, wherein the first display region 41 is provided with a number of display items, which are related to a vehicle battery swap. In actual use of the vehicle battery swap manipulation system, the user can select a display item from these display items as needed, so as to acquire corresponding information from the data obtained from the vehicle battery swap platform 1 via the first device 2. Then these pieces of information are visually displayed in the second display region 42 to form different functional interfaces, so that the user can conveniently and clearly learn working statuses of the vehicle battery swap platform and a vehicle battery swap operation via these functional interfaces, and may then take appropriate countermeasures accordingly, thereby effectively resolving the problems existing in the prior art such as an inconvenient battery swap operation, an unclear system status, and inconvenient equipment repair or maintenance.

In an optional scenario, the display item T in the first display region 41 may comprise one or more of monitoring an operation status of the vehicle battery swap platform 1, monitoring an abnonnality of the vehicle battery swap platform 1 and/or a vehicle battery swap operation, displaying a current battery swap operation of the vehicle battery swap platform 1, and displaying a system parameter of the vehicle battery swap platform 1.

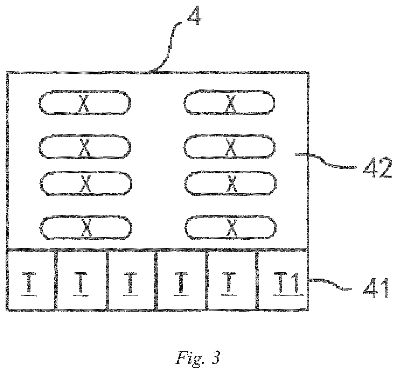

In addition, the display item described above may also optionally comprise an interface selection item T1, wherein the interface selection item T1 is specially configured to visually display, in the second display region 42, links used to enter different functional interfaces, so that the user can perform a corresponding selection operation according to a use requirement. For example, FIG. 3 merely exemplarily illustrates that, after the user has selected the interface selection item T1, for example, links for a manual debugging and operating record, capacity statistics, an operation parameter, a system parameter, and the like, are displayed in the second display region 42.

The functional interfaces described above are visually displayed in the second display region 42 of the display device 4. By way of example only, the functional interfaces may include, but are not limited to, one or more of a monitoring interface, an operation parameter interface, a system parameter interface, a parking platform interface, and a dolly platform interface.

Specifically, the monitoring interface is configured to visually display a completion status of each operating action and/or position information about a movement mechanism in the vehicle battery swap platform 1 during a vehicle battery swap process, so that the user can monitor a current working status of the system in real time to determine whether there is a failure or an abnormal situation.

The operation parameter interface is configured to visually display operation parameters of the vehicle battery swap platform 1. These operation parameters include, but are not limited to, a positioning parameter of a vehicle on the vehicle battery swap platform 1, an onboard battery locking and unlocking parameter, and the like, so that the user learns current operation parameters of the vehicle battery swap platform 1.

The system parameter interface is configured to visually display a preset safe operation parameter, a preset abnormality processing parameter, and/or an actual operation result determination parameter of the vehicle battery swap platform 1, so that the user can learn a security status of the vehicle battery swap platform 1.

The parking platform interface is configured to visually display a layout position of a vehicle on the vehicle battery swap platform 1 and a layout position of a first sensor, wherein the first sensor is configured to detect the layout position of the vehicle on the vehicle battery swap platform 1, thereby facilitating query, maintenance, or repair of the user.

The dolly platform interface is configured to visually display a layout position of a battery swap dolly on the vehicle battery swap platform 1 and a layout position of a second sensor, wherein the second sensor is configured to detect the layout position of the vehicle on the vehicle battery swap platform 1, thereby facilitating query, maintenance, or repair of the user.

In an optional scenario, in the vehicle battery swap manipulation system for visualized human-machine interactions, the user may be allowed to make visual modifications to some or all of the information in the second display region 42 of the display device 4, so that the user can conveniently and quickly perform adjustment, maintenance, or repair operations on the vehicle battery swap platform 1 and a vehicle battery swap operation procedure via the human-machine interaction interface provided by the vehicle battery swap manipulation system.

The first device 2, the second device 3, and the display device 4 in the vehicle battery swap manipulation system for visualized human-machine interactions are respectively exemplarily described above in terms of their basic compositions, functions, and use. The vehicle battery swap manipulation system for visualized human-machine interactions provided by the invention can realize visualized manipulation of a vehicle battery swap operating procedure, and make information acquisition and operations of the user convenient, intuitive, and efficient, thereby providing good human-machine interactivity, and bringing pleasing use experience to the user.

In addition, according to another technical solution of the invention, there is further provided an onboard battery operating system which comprises the vehicle battery swap platform 1 and the vehicle battery swap manipulation system for visualized human-machine interactions provided by the invention. The vehicle battery swap manipulation system is associated with the vehicle battery swap platform 1 via the first device 2 therein, and acquires data related to a vehicle battery swap from the vehicle battery swap platform 1 via the first device 2 according to a request outputted by the user via the vehicle battery swap manipulation system. In this way, the technical effects and advantages provided by the solution of the invention that are obviously superior to the prior art and discussed above are fully exhibited.

The vehicle battery swap manipulation system for visualized human-machine interactions and the onboard battery operating platform are described above in detail by way of example only. These examples are for the purpose of illustrating the principle of the invention and its implementations only, rather than for limiting the invention. Those skilled in the art can make various variations and improvements without departing from the spirit and scope of the invention. For example, although the first display region 41 is schematically disposed below the second display region 42 in the given embodiment, the first display region 41 is allowed to be disposed at other suitable locations on the display device 4 in some application scenarios. For another example, in some embodiments, three or more display regions may be provided on the human-machine interaction interface to meet actual application needs. Therefore, all the equivalent technical solutions should all fall within the scope of the invention and be defined by the claims of the invention.

## Claims

1. A vehicle battery swap manipulation system for visualized human-machine interactions, **characterized by** comprising:
a first device connected to a vehicle battery swap platform, configured to acquire data related to a vehicle battery swap from the vehicle battery swap platform according to a received input request;
a second device provided with one or more buttons connected to the first device, configured for a user to select and trigger different buttons to output different input requests to the first device; and
a display device connected to the first device, configured to visually display a human-machine interaction interface containing the data acquired according to the input request, wherein the human-machine interaction interface has at least a first display region and a second display region, the user is able to choose to acquire corresponding information from the data by selecting a display item in the first display region that is related to a vehicle battery swap, and the information is visually displayed in the second display region to form a functional interface.

2. The vehicle battery swap manipulation system for visualized human-machine interactions according to claim 1, wherein at least a part of the information in the second display region allows to be visually modified by the user.

3. The vehicle battery swap manipulation system for visualized human-machine interactions according to claim 1, wherein the display item in the first display region comprises one or more of monitoring an operation status of the vehicle battery swap platform, monitoring an abnormality of the vehicle battery swap platform and/or a vehicle battery swap operation, displaying a current battery swap operation of the vehicle battery swap platform, and displaying a system parameter of the vehicle battery swap platform.

4. The vehicle battery swap manipulation system for visualized human-machine interactions according to claim 3, wherein the display item in the first display region further comprises an interface selection item configured to visually display, in the second display region, links used for the user to select operations to enter different functional interfaces.

5. The vehicle battery swap manipulation system for visualized human-machine interactions according to claim 1, wherein the functional interface comprises:
a monitoring interface configured to visually display a completion status of each operating action and/or position information about a movement mechanism in the vehicle battery swap platform during a vehicle battery swap process;
an operation parameter interface configured to visually display an operation parameter of the vehicle battery swap platform;
a system parameter interface configured to visually display a preset safe operation parameter, a preset abnormality processing parameter, and/or an actual operation result determination parameter of the vehicle battery swap platform;
a parking platform interface configured to visually display a layout position of a vehicle on the vehicle battery swap platform and a layout position of a first sensor, wherein the first sensor is configured to detect the layout position of the vehicle on the vehicle battery swap platform; and/or
a dolly platform interface configured to visually display a layout position of a battery swap dolly on the vehicle battery swap platform and a layout position of a second sensor, wherein the second sensor is configured to detect the layout position of the vehicle on the vehicle battery swap platform.

6. The vehicle battery swap manipulation system for visualized human-machine interactions according to claim 1, wherein the first display region is disposed below the second display region.

7. The vehicle battery swap manipulation system for visualized human-machine interactions according to claim 1, wherein the buttons comprise a battery swap button configured to be selected and triggered by the user to automatically perform a vehicle battery swap operation via the vehicle battery swap platform.

8. The vehicle battery swap manipulation system for visualized human-machine interactions according to claim 7, wherein the buttons further comprise:
a start button configured to be selected and triggered by the user to start operation of the vehicle battery swap platform;
a reset button configured to be selected and triggered by the user to perform initialization of the vehicle battery swap platform;
an emergency stop button configured to be selected and triggered by the user to stop the operation of the vehicle battery swap platform in an emergency; and/or
a pause button configured to be selected and triggered by the user to suspend the operation of the vehicle battery swap platform.

9. The vehicle battery swap manipulation system for visualized human-machine interactions according to any of claims 1 to 8, wherein a PLC controller is used for the first device, and/or the second device is shaped as a panel, and/or the display device comprises one or more of a computer display terminal, a mobile device display terminal, and a video wall.

10. An onboard battery operating system, **characterized by** comprising:
a vehicle battery swap platform configured to perform a battery swap operation on an onboard battery; and
a vehicle battery swap manipulation system for visualized human-machine interactions according to any of claims 1 to 9.
